# EUROPÄISCHE PATENTSCHRIFT

(11) **EP 0 689 522 B1**
(45) Veröffentlichungstag und Bekanntmachung des Hinweises auf die Patenterteilung: **30.10.1996**
(21) Anmeldenummer: 94909121.9
(22) Anmeldetag: 08.03.1994
(51) Int. Cl.: C02F 1/28

(54) **VERFAHREN ZUR ABTRENNUNG VON ANIONISCHEN ORGANISCHEN VERBINDUNGEN AUS WÄSSRIGER LÖSUNG**
METHOD OF SEPARATING ANIONIC ORGANIC COMPOUNDS OUT OF AQUEOUS SOLUTION
PROCEDE POUR LA SEPARATION DE COMPOSES ORGANIQUES ANIONIQUES CONTENUS DANS UNE SOLUTION AQUEUSE

(30) Priorität: 19.03.1993 DE 4308843
(43) Veröffentlichungstag der Anmeldung: 03.01.1996
(73) Patentinhaber: BASF AKTIENGESELLSCHAFT, 67056 Ludwigshafen (DE)
(72) Erfinder: KERMER, Wolf-Dieter, D-67136 Fussgoenheim (DE); STEENKEN-RICHTER, Ingrid, D-67067 Ludwigshafen (DE); FAULHABER, Gerhard, D-67098 Bad Duerkheim (DE)
(86) Internationale Anmeldenummer: EP9400700
(87) Internationale Veröffentlichungsnummer: WO9421562

(56) Entgegenhaltungen:
- EP-A- 0 432 787
- EP-A- 0 455 173
- FR-A- 2 250 712
- FR-A- 2 284 567
- US-A- 4 035 196

## Beschreibung

Die vorliegende Erfindung betrifft ein neues Verfahren zur Abtrennung von anionischen organischen Verbindungen aus wäßriger Lösung, wobei man die wäßrige Lösung mit einem oder mehreren Aminen behandelt.

Die Entfernung von anionischen organischen Verbindungen aus wäßriger Lösung, insbesondere aus Abwässern, ist ein Problem das zunehmend an Bedeutung gewinnt.

Beispielsweise ziehen die beim Färben oder Bedrucken von textilen Fasern oder Geweben zur Anwendung kommenden sauren Farbstoffe meist nicht vollständig auf das textile Material, so daß in der Regel die resultierenden Abwässer noch Farbstoff enthalten.

Bei der Färbung von Fasern oder Geweben aus Cellulose, Wolle oder anderen natürlichen oder synthetischen Polyamiden, deren Mischungen untereinander oder Mischungen von Wolle oder anderen natürlichen oder synthetischen Polyamiden, beispielsweise mit Cellulose, Polyestern, Polyacrylnitril oder Polyurethanen, ist dies besonders unerwünscht, da die hier zur Färbung verwendeten Farbstoffe häufig Schwermetallkomplexe von beispielsweise Azo- oder Azomethinfarbstoffen sind.

Aus der älteren Patentanmeldung EP-A-531 825 ist ein Verfahren bekannt, Säurefarbstoffe mittels organischen Aminen, gegebenenfalls in Gegenwart eines mit Wasser nicht mischbaren inerten organischen Lösungsmittels, aus Färbereiabwässern zu entfernen. Dabei wird das Abwasser mit Amin und gegebenenfalls inertem Lösungsmittel kräftig vermischt, wobei sich zwei Phasen ausbilden. Der in der organischen Phase als Aminsalz vorliegende Säurefarbstoff kann dann durch Phasentrennung von der wäßrigen Phase abgetrennt werden. Diese Methode ist jedoch aufwendig und im technischen Maßstab nur schwer durchführbar.

FR-A-2 284 567 beschreibt die Entfernung von organischen, anionischen Verbindungen aus wässrigen Lösungen, wobei ein Adsorptionsmittel verwendet wird, welches ein Trägermaterial und ein darauf aufgebrachtes aminogruppenhaltiges Polymeres enthält.

Aufgabe der vorliegenden Erfindung war es nun, ein neues Verfahren zur Abtrennung von anionischen organischen Verbindungen aus wäßriger Lösung bereitzustellen, das in einfacher Weise, auch in technischem Maßstab, vorgenommen werden kann und mittels dessen die in der wäßrigen Lösung vorhandenen Mengen der anionischen organischen Verbindungen praktisch quantitativ und ohne Probleme entfernt werden können.

Es wurde nun gefunden, daß die Abtrennung von anionischen organischen Verbindungen aus wäßriger Lösung vorteilhaft gelingt, wenn man die wäßrige Lösung mit einem oder mehreren primären, sekundären oder tertiären Monoaminen, Diaminen oder Triaminen, die sich auf einem Träger befinden, behandelt.

Geeignete anionische Verbindungen, die mittels der erfindungsgemäßen Verfahrens aus wäßriger Lösung abgetrennt werden können, sind vorzugsweise solche, deren Molekulargewicht mindestens 150, vorzugsweise mindestens 200 beträgt. Eine obere Grenze existiert prinzipiell nicht, da es mit dem erfindungsgemäßen Verfahren auch möglich ist, oligomere oder polymere organische Verbindungen, die anionisch modifiziert sind, abzutrennen.

Als funktionelle Gruppen, die diesen organischen Verbindungen einen anionischen Charakter verleihen, kommen z.B. die Sulfonatgruppe (-SO₃^{⊖}), Sulfatogruppe (-O-SO₃^{⊖}), die Carboxylatgruppe (-COO^{⊖}) oder die Phosphonatgruppe (-PO₃^{2⊖}) in Betracht, wobei solche Verbindungen, die mindestens eine Sulfonatgruppe aufweisen, bevorzugt sind.

Geeignete anionische Verbindungen, die erfindungsgemäß abgetrennt werden können, sind z.B. optische Aufheller, Farbstoffe (z.B. Mono-, Bis- oder Trisazofarbstoffe, Azomethinfarbstoffe, Formazanfarbstoffe, Anthrachinonfarbstoffe, Dioxazinfarbstoffe, Phthalocyaninfarbstoffe, Chinophthalone oder Triphenylmethanfarbstoffe), Mono- oder Polycarbonsäuren, Mono- oder Polysulfonsäuren, Mono- oder Polyphosphonsäuren, anionische Tenside oder Aminoessigsäuren (z.B. Ethylendiamintetraessigsäure).

Vorzugsweise werden mittels des erfindungsgemäßen Verfahrens Farbstoffe, insbesondere solche, die mindestens eine Hydroxysulfonylgruppe (Sulfonatgruppe) aufweisen (sogenannte Säurefarbstoffe), abgetrennt. Die Chromophore stammen dabei insbesondere aus der Klasse der Azo-, Azomethin-, Anthrachinon-, Formazan- oder Phthalocyaninreihe. Sie können auch eine oder mehrere reaktive Gruppen aufweisen.

Bei den Säurefarbstoffen aus der Klasse der Azo- oder Azomethinfarbstoffe sind auch Metallkomplex-Farbstoffe umfaßt. Dabei handelt es sich in der Regel um die Chrom-, Kobalt-, Kupfer-, Nickel- oder Eisen-Komplexe von Monoazo-, Disazo- oder Azomethinfarbstoffen. Diese liegen im allgemeinen als 1:1 oder 1:2-Metallkomplexe vor.

Die metallisierten Gruppen befinden sich vorzugsweise jeweils in ortho-Stellung zur Azogruppe, z.B. in Form von o,o'-Dihydroxy-, o-Hydroxy-o'-carboxy-, o-Carboxy-o'-amino- oder o-Hydroxy-o'-amino-azogruppierungen.

Die Säurefarbstoffe können auch noch Carboxylgruppen aufweisen und liegen in der Regel als Salze vor, z.B. als Alkalisalze, wie Kalium-, Lithium- oder insbesondere Natriumsalze, oder als Ammoniumsalze.

Im Colour Index werden diese Farbstoffe als "Acid Dyes", "Solvent Dyes", "Direct Dyes" oder "Reactive Dyes" bezeichnet.

Beispielhaft für Metallkomplexfarbstoffe seien C.I. Acid Yellow 99 (13900), C.I. Yellow 104, C.I. Acid Yellow 151 (13906), C.I. Acid Yellow 155, C.I. Acid Yellow 176, C.I. Acid Yellow 194, C.I. Acid Yellow 204, C.I. Acid Yellow 241, C.I. Acid Orange 74 (18745), C.I. Orange 142, C.I. Acid Red 186 (18810), C.I. Acid Red 214 (19355), C.I. Acid Red 315, C.I. Acid Red 357, C.I. Acid Red 359,C.I. Acid Red 362, C.I. Acid Red 425, C.I. Acid, Violet 58 (16260), C.I. Acid Violet 90 (18762), C.I. Acid Blue 158 (14880), C.I. Acid Blue 185, C.I. Acid Blue 193 (15707), C.I. Acid Blue 284, C.I. Acid Blue 296, C.I. Acid Blue 317, C.I. Acid Blue 325, C.I. Acid Blue 342, C.I. Acid Brown 282, C.I. Acid Brown 289, C.I. Acid Brown 355, C.I. Acid Brown 365, C.I. Acid Brown 413, C.I. Acid Brown 415, C.I. Acid Green 12 (13425), C.I. Acid Green 104, C.I. Acid Green 108, C.I. Acid Black 52 (15711), C.I. Acid Black 60 (18165), C.I. Acid Black 172, C.I. Acid Black 187, C.I. Acid Black 194 oder C.I. Acid Black 220 genannt.

Weiterhin kommen z. B. auch die Farbstoffe C.I. Solvent Yellow 19 (13900:1), C.I. Solvent Yellow 21 (18690), C.I. Solvent Yellow 32 (48045), C.I. Solvent Orange 5 (18745:1), C.I. Solvent Orange 6 (18736:1), C.I. Direct Yellow 27 (13950), C.I. Direct Yellow 58, C.I. Direct Orange 34 (40215, 40220), C.I. Direct Orange 39 (40215), C.I. Direct Orange 57, C.I. Direct Orange 102, C.I. Direct Red 81 (28160), C.I. Direct Red 212, C.I. Direct Blue 86, C.I. Direct Blue 98 (23155), C.I. Direct Blue 199, C.I. Direct Blue 229, C.I. Direct Black 19 (35255), C.I. Direct Black 22 (35435), C.I. Direct Black 80 (31600) oder C.I. Direct Black 112 in Betracht.

Geeignete Säurefarbstoffe sind weiterhin z.B. C.I. Acid Yellow 61 (18968), C.I. Acid Yellow 184, C.I. Acid Yellow 219, C.I. Acid Yellow 230, C.I. Acid Yellow 242, C.I. Acid Orange 3 (10385), C.I. Acid Orange 156 (26501), C.I. Acid Red 1 (18050), C.I. Acid Red 118, C.I. Acid Red 274, C.I. Acid Red 276, C.I. Acid Red 337 (17102), C.I. Acid Red 415, C.I. Acid Blue 25 (62055), C.I. Acid Blue 40 (62125), C.I. Acid Blue 80 (61585), C.I. Acid Blue 113 (26360), C.I. Acid Blue 204, C.I. Acid Blue 264, C.I. Acid Blue 324, C.I. Acid Blue 333, C.I. Acid Green 84 oder C.I. Acid Black 1 (20470).

Geeignete Reaktivfarbstoffe sind z.B. C.I. Reactive Yellow 15, C.I. Reactive Yellow 17 (18852), C.I. Reactive Yellow 25, C.I. Reactive Yellow 27, C.I. Reactive Yellow 37, C.I. Reactive Yellow 57, C.I. Reactive Yellow 81, C.I. Reactive Yellow 84, C.I. Reactive Yellow 95, C.I. Reactive Yellow 111, C.I. Reactive Yellow 125, C.I. Reactive Yellow 135, C.I. Reactive Yellow 136, C.I. Reactive Yellow 137, C.I. Reactive Yellow 145, C.I. Reactive Yellow 160, C.I. Reactive Orange 7 (17756), C.I. Reactive Orange 12, C.I. Reactive Orange 13 (18270), C.I. Reactive Orange 15, C.I. Reactive Orange 16, C.I. Reactive Orange 64, C.I. Reactive Orange 67, C.I. Reactive Orange 69, C.I. Reactive Orange 70, C.I. Reactive Orange 82, C.I. Reactive Orange 109, C.I. Reactive Red 21, C.I. Reactive Red 24, C.I. Reactive Red 35, C.I. Reactive Red 40, C.I. Reactive Red 43, C.I. Reactive Red 45, C.I. Reactive Red 49, C.I. Reactive Red 58, C.I. Reactive Red 94, C.I. Reactive Red 120 (25 810), C.I. Reactive Red 123, C.I. Reactive Red 124, C.I. Reactive Red 141, C.I. Reactive Red 158, C.I. Reactive Red 159, C.I. Reactive Red 174, C.I. Reactive Red 180, C.I. Reactive Red 194, C.I. Reactive Red 195, C.I. Reactive Red 198, C.I. Reactive Red 225, C.I. Reactive Red 242, C.I. Reactive Violet 5, C.I. Reactive Violet 23, C.I. Reactive Violet 33, C.I. Reactive Violet 38, C.I. Reactive Blue 5 (61 205:1), C.I. Reactive Blue 13, C.I. Reactive Blue 19 (61 200), C.I. Reactive Blue 21, C.I. Reactive Blue 27, C.I. Reactive Blue 28, C.I. Reactive Blue 29, C.I. Reactive Blue 38, C.I. Reactive Blue 41, C.I. Reactive Blue 49, C.I. Reactive Blue 52, C.I. Reactive Blue 71, C.I. Reactive Blue 72, C.I. Reactive Blue 113, C.I. Reactive Blue 114, C.I. Reactive Blue 116, C.I. Reactive Blue 120, C.I. Reactive Blue 158, C.I. Reactive Blue 160, C.I. Reactive Blue 171, C.I. Reactive Blue 181, C.I. Reactive Blue 182, C.I. Reactive Blue 184, C.I. Reactive Blue 191, C.I. Reactive Blue 193, C.I. Reactive Blue 194, C.I. Reactive Blue 198, C.I. Reactive Blue 209, C.I. Reactive Blue 211, C.I. Reactive Blue 220, C.I. Reactive Blue 221, C.I. Reactive Blue 222, C.I. Reactive Blue 224, C.I. Reactive Blue 225, C.I. Reactive Brown 7, C.I. Reactive Brown 11, C.I. Reactive Brown 16, C.I. Reactive Brown 18, C.I. Reactive Brown 19, C.I. Reactive Brown 21, C.I. Reactive Brown 31, C.I. Reactive Brown 37, C.I. Reactive Brown 48, C.I. Reactive Green 21, C.I. Reactive Black 5 (20505) oder C.I. Reactive Black 8.

Die im erfindungsgemäßen Verfahren zur Anwendung kommenden Amine sind entweder primäre, sekundäre oder tertiäre Monoamine, Diamine oder Triamine. Die Monoamine weisen mindestens 6 Kohlenstoffatome auf und stammen aus der Reihe der Alkylamine. Die Alkylreste sind gegebenenfalls durch 1 oder 2 Sauerstoffatome in Etherfunktion unterbrochen und können durch Phenyl substituiert sein. Die Diamine weisen in der Regel 12 bis 40 und die Triamine in der Regel 18 bis 50 Kohlenstoffatome auf.

Die Anwendung von Monoaminen ist bevorzugt.

Geeignete primäre Amine sind z.B. Hexylamin, 2-Methylpentylamin, Heptylamin, 1-Ethylpentylamin, Octylamin, 2-Ethylhexylamin, Isooctylamin, Nonylamin, Isononylamin, Decylamin, Isodecylamin, Undecylamin, Dodecylamin, Tridecylamin, Isotridecylamin, (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436), Tetradecylamin, Pentadecylamin, Hexadecylamin, Heptadecylamin, Octadecylamin, 3-(2-Ethylhexyloxy)propylamin oder 2-Phenylethylamin.

Geeignete sekundäre Amine sind z.B. N-Ethyl-N-butylamin, Dibutylamin, Diisobutylamin, N-Methyl-N-(2-ethylhexyl)amin, N-Ethyl-N-(2-ethylhexylamin), Bis(2-ethylhexyl)amin oder Diisotridecylamin.

Geeignete tertiäre Amine sind z.B. Tributylamin, Trihexylamin, Trioctylamin, Tridecylamin, N,N-Dimethyl-N-(2-ethylhexyl)amin oder N,N-Dimethyl-N-C₁₀/C₁₈-alkylamin (Gemisch).

Im erfindungsgemäßen Verfahren können auch Di- oder Triamine, z.B. Bis(4-aminocyclohexyl)methan oder 1-Amino-3-oleylaminopropan, zur Anwendung gelangen.

Bevorzugt ist die Anwendung von primären, sekundären oder tertiären Aminen, die 6 bis 30, vorzugsweise 8 bis 26 Kohlenstoffatome aufweisen.

Geeignete Trägermaterialien für die primären, sekundären oder tertiären Amine können sowohl anorganischer als auch organischer Natur sein. Sie weisen in der Regel eine spezifische Oberfläche von mindestens 10 m²/g, vorzugsweise mindestens 30 m²/g, insbesondere mindestens 100 m²/g und ganz besonders bevorzugt mindestens 500 m²/g auf. Ihre mittlere Teilchengröße beträgt im allgemeinen 0,1 bis 5 mm, vorzugsweise 0,3 bis 2,5 mm.

Anorganische Trägermaterialien stammen z.B. aus der Reihe der Aluminiumoxide, wie α-Aluminiumoxid, β-Aluminiumoxid, γ-Aluminiumoxid oder δ-Aluminiumoxid, oder der Siliciumdioxide, wie Kieselgel oder Kieselgur. Solche Produkte sind an sich bekannt und beispielsweise in Ullmanns Encyklopädie der technischen Chemie, 4. Auflage, Band 7, Seiten 298 bis 299, sowie Band 21, Seiten 453 und 458 bis 459, beschrieben.

Weitere anorganische Trägermaterialien stammen z.B. aus der Reihe der Tone, wie Bentonite oder Montmorillonite. Solche Produkte sind an sich bekannt und beispielsweise in Ullmanns Encyklopädie der technischen Chemie, 4. Auflage, Band 23, Seiten 311 bis 326, beschrieben.

Weitere anorganische Trägermaterialien stammen z.B. aus der Reihe der Zeolithe oder der nicht-zeolithischen Molekularsiebe. Zeolithe sind kristalline Aluminosilikate, die eine hochgeordnete Struktur mit einem starren dreidimensionalen Netzwerk von SiO₄- oder AlO₄-Tetraedern besitzen, die durch gemeinsame Sauerstoffatome verbunden sind. Das Verhältnis der Silicium- und Aluminiumatome zu Sauerstoff beträgt 1:2 (siehe Ullmanns Encyklopädie der technischen Chemie, 4. Auflage, Band 24, Seite 575. Die Elektrovalenz der Aluminium enthaltenden Tetraeder ist durch Einschluß von Kationen in den Kristall, z.B. eines Alkalimetall- oder Wasserstoffions, ausgeglichen. Die Räume zwischen den Tetraedern sind vor der Dehydration durch Trocknen oder Calcinieren von Wassermolekülen besetzt.

Entsprechend ihrer Struktur werden Zeolithe in verschiedene Gruppen unterteilt. So bilden bei der Mordernit-Gruppe Ketten oder bei der Chabasit-Gruppe Schichten aus Tetraedern die Zeolith-Struktur, während sich bei der Faujasit-Gruppe die Tetraeder zu Polyedern ordnen, z.B. in Form eines Kubooktaeders, der aus Vierringen oder Sechsringen aufgebaut ist. Je nach Verknüpfung der Kubooktaeder, wodurch unterschiedlich große Hohlräume und Poren entstehen, unterscheidet man Zeolithe vom Typ A, L, X oder Y.

Für das erfindungsgemäße Verfahren als Trägermaterialien in Betracht kommende Zeolithe sind insbesondere solche auch der Mordenit-Gruppe, engporige Zeolithe vom Erionit- oder Chabasit-Typ oder Zeolithe vom Faujasit-Typ, z.B. Y-, X- oder L-Zeolithe. In diese Gruppe von Zeolithen gehören auch die sogenannten "ultrastabilen" Zeolithe des Faujasittyps, d.h. dealuminierte Zeolithe. Verfahren zur Herstellung solcher Zeolithe sind z.B. in der US-A-4 512 961 beschrieben.

Weiterhin zu nennen sind Zeolithe vom Pentasiltyp. Diese haben als Grundbaustein einen aus SiO₄-Tetraedern aufgebauten Fünfring gemeinsam. Sie sind durch ein hohes SiO₂:Al₂O₃-Verhältnis gekennzeichnet sowie durch Porengrößen, die zwischen denen der Zeolithe vom Typ A und denen vom Typ X oder Y liegen.

Weitere anorganische Trägermaterialien stammen z.B. aus der Reihe der Aktivkohlen oder Kokse (beispielsweise Braun- oder Steinkohlekokse). Solche Produkte sind an sich bekannt und beispielsweise in Ullmanns Encyklopädie der technischen Chemie, 4. Auflage, Band 2, Seiten 602 bis 606, sowie Band 14, Seiten 496 und 497, 544 bis 547, sowie 627 und 628, beschrieben.

Als organische Trägermaterialien können sowohl natürliche als auch synthetische Materialien zur Anwendung gelangen.

Geeignete natürliche Materialien sind z.B. Baumwolle, Wolle, Holzteilchen (Sägemehl), Zellwolle, Watte oder Fasermischungen.

Geeignete synthetische Materialien sind z.B. Faser- oder Schaummaterialien auf Polymerisat- oder Polykondensatbasis, beispielsweise Fasern aus Polypropylen, Polyamid, Polyester oder Polyacrylnitril, oder Schaummaterialien aus Urethan- oder Melamin-Formaldehyd-Kondensationsprodukten.

Bei der Verwendung von Schaummaterialien sind solche bevorzugt, die eine Rohdichte von 8 bis 15 kg/m³ aufweisen (bestimmt gemäß DIN 53 420).

Geeignete synthetische Trägermaterialien können z.B. auch aus kleinen kugelförmigen Polymerteilchen aufgebaut sein. Solche Produkte sind an sich bekannt und werden z.B. als Eichstandards in der Elektronenmikroskopie angewandt. Sie stammen z.B. aus der Polystyrolreihe (US-A-4 937 171).

Ein wichtiger Parameter für die Trägermaterialien, die gegebenenfalls noch Tenside enthalten können, sind ihre Durchflußeigenschaften, d.h. ein gutes Fließen der flüssigen Phase durch den Träger muß gewährleistet sein.

Bevorzugt sind Trägermaterialien auf Basis von Wolle, Watte, Aktivkohle, Fasermaterialien, dabei insbesondere Fasern aus Polypropylen, oder Schaummaterialien, dabei insbesondere Melamin-Formaldehyd-Kondensationsprodukte.

Der für das erfindungsgemäße Verfahren benötigte Träger, auf dem sich das Amin befindet, im folgenden als "aktivierter Träger" bezeichnet, kann auf einfache Weise nach an sich bekannten Methoden erhalten werden.

Beispielsweise kann man Amin und Träger unter Rühren vermischen, das Gemisch anschließend in eine geeignete Apparatur geben, freies Amin abtrennen und den aktivierten Träger anschließend mit Wasser und gegebenenfalls mit verdünnter Säure waschen.

Abhängig vom Trägermaterial beträgt im aktivierten Träger das Gewichtsverhältnis Amin:Trägermaterial in der Regel 2:1 bis 1:10, vorzugsweise 1:1 bis 1:3.

Die Konzentration der anionischen organischen Verbindungen in der zur behandelnden wäßrigen Lösung kann in weiten Grenzen schwanken und im allgemeinen bis zu 2 g/l betragen.

Vorzugsweise handelt es sich bei den wäßrigen Lösungen um Abwässer, enthaltend anionische organische Verbindungen, insbesondere Säurefarbstoffe.

Das zu behandelnde Abwasser kann dabei, abhängig von der Farbtiefe, bis zu ca. 1500 mg/l an Säurefarbstoff (bezogen auf die reine Form) enthalten. In einigen Fällen können jedoch auch höher konzentrierte Farbstofflösungen, z. B. Restflotten, die bis zu 30 g/l Farbstoff aufweisen, behandelt werden. Eine Untergrenze der Farbstoffmenge im üblichen Sinne existiert nicht. Sie wird einzig durch die Wirtschaftlichkeit begründet, da das erfindungsgemäße Verfahren auch auf Abwässer mit sehr geringer Konzentration an Säurefarbstoffen angewendet werden kann.

Der pH-Wert des zu behandelnden Abwassers soll üblicherweise 1 bis 8, vorzugsweise 1,5 bis 5 betragen. Die Einstellung des pH-Werts kann mit Säuren, z. B. Salzsäure, Schwefelsäure, Ameisensäure, Essigsäure oder Oxalsäure oder auch mit Kohlendioxid, insbesondere in Form von Rauchgas, erfolgen.

Das erfindungsgemäße Verfahren wird üblicherweise bei einer Temperatur von 0 bis 80°C, vorzugsweise 5 bis 50°C und insbesondere 15 bis 30°C durchgeführt.

Das neue Verfahren wird zweckmäßig so durchgeführt, daß man die zu behandelnde wäßrige Lösung, die gegebenenfalls noch Hilfsmittel, z.B. Tenside, enthalten kann, in einer geeigneten Apparatur, z.B. in einer Chromatographiesäule, die den aktivierten Träger enthält, gibt und über den aktivierten Träger ablaufen läßt. Es ist natürlich auch möglich, die zu behandelnde Lösung zusammen mit dem aktivierten Träger in einer Rührapparatur zu rühren.

Nach dem Durchlaufen des aktivierten Trägers, was im allgemeinen mit einer Geschwindigkeit von ca. 1 bis 3 Liter pro Stunde und pro Liter Säulenvolumen vollzogen wird, ist die anionische organische Verbindung aus der wäßrigen Lösung abgetrennt und haftet auf dem aktivierten Träger (wenn man aktivierten Träger und die Lösung rührt, ist nach ca. 2 bis 20 Minuten die anionische organische Verbindung ebenfalls aus der wäßrigen Lösung abgetrennt und haftet auf dem aktivierten Träger).

Der aktivierte Träger kann für mehrere Reinigungscyclen verwendet werden. Wenn er an anionischer organischer Verbindung gesättigt ist, kann er leicht regeneriert werden. Dies kann z.B. durch Waschen mit wäßriger Base, z.B. wäßrige Alkalihydroxid- oder Alkalicarbonatlösung, vorzugsweise verdünnte Natronlauge oder Kalilauge, oder wäßrige Ammoniaklösung, geschehen. Vorausgesetzt, daß das Trägermaterial alkalistabil ist, nimmt der aktivierte Träger bei dieser Behandlung keinen Schaden, d.h. die auf ihm befindlichen primären, sekundären oder tertiären Amine werden nicht entfernt.

In manchen Fällen kann es auch von Vorteil sein, dem erfindungsgemäßen Verfahren einen zusätzlichen Reinigungsschritt voranzustellen, beispielsweise indem man die zu behandelnde wäßrige Lösung zuerst mit einem Adsorptionsmittel, z.B. Aktivkohle oder Polypropylenfasern, in Kontakt bringt.

Das neue Verfahren, das sowohl in kontinuierlicher als auch diskontinuierlicher Arbeitsweise vorgenommen werden kann, ist, verglichen mit der bekannten zweiphasigen Ionenpaarextraktion auf einfache Weise durchführbar. Es benötigt kein zusätzliches organisches Lösungsmittel und führt zu keiner Kontaminierung der zu behandelnden wäßrigen Lösung, beispielsweise durch Amin. Mittels des neuen Verfahrens gelingt es, die anionischen organischen Verbindung vollständig aus der wäßrigen Lösung zu entfernen. Bei der Abtrennung von Säurefarbstoffen aus Abwässern ist weiterhin vorteilhaft, daß eine Absenkung des AOX-Wertes gemäß DIN 38 409-H14 im Abwasser erzielt wird. Bei der Abtrennung von sauren Metallkomplex-Farbstoffen können diese nach erfolgter Abtrennung auch zurückgewonnen und dem Färbeprozeß wieder zugeführt werden.

Die folgenden Beispiele sollen die Erfindung näher erläutern.

### Herstellung der Farbstofflösung I

Eine wäßrige Flotte, enthaltend 2 g/l C.I. Reactive Red 120 (25810), 20 g/l Natriumcarbonat und 70 g/l Natriumsulfat wurde 1 Stunde bei 100°C gerührt. Das resultierende Farbstoffhydrolysat wurde anschließend mit Wasser im Volumenverhältnis 1:9 verdünnt und mit 10 g/l Natriumcarbonat und 21 g/l Natriumsulfat versetzt, um so eine Farbstoff- und Salzkonzentration einzustellen, wie sie in praxisüblichen Färbebädern vorliegt.

Der pH-Wert der Lösung wurde dann mit konzentrierter Schwefelsäure von 10,8 auf 2,5 gestellt. Die Farbstofflösung enthielt 200 mg/l Farbstoff und wies einen CSB-Wert von 250 mg/l und einen TOC-Wert von 69 mg/l auf.

### Herstellung der Farbstofflösung II

Man verfuhr analog der Herstellung der Farbstofflösung I, verwendete jedoch 2 g/l des Farbstoffs der Formel A

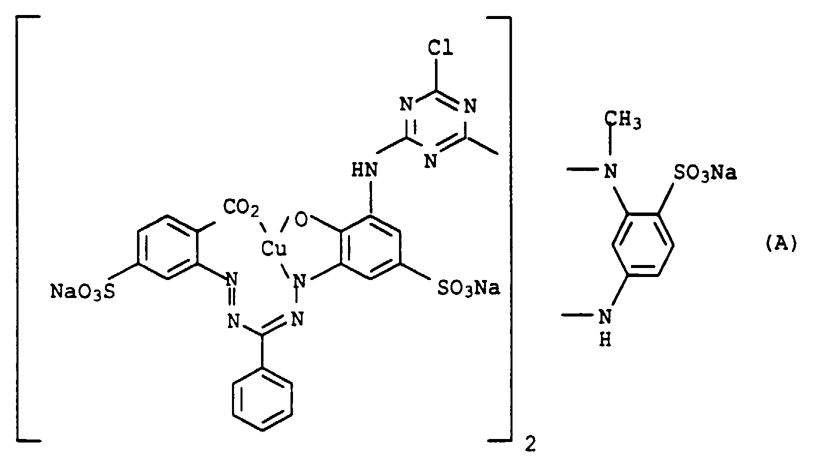

### Herstellung der Farbstofflösung III

Die Herstellung erfolgte nach der folgenden allgemeinen Färbevorschrift für Reaktivfarbstoffe

| | |
|---|---|
| Material: | gebleichtes und mercerisiertes Baumwollgewebe |
| Rezeptur: | 3 Gew.-% Farbstoff (bezogen auf das Gewicht des Gewebes) |
| | 30 g/l Natriumsulfat |
| | 5 g/l Natriumcarbonat |
| | 2 g/l 33 gew.-%ige Natronlauge |
| | pH-Wert ca. 11 |
| Flottenverhältnis: | 1:15 |
| Temperaturverlauf: | Innerhalb von 60 Minuten auf 80°C erhitzen und 60 Minuten bei dieser Temperatur halten. |

Anschließend Zugabe von konz. Schwefelsäure bis zu einem pH-Wert von 2,5.

Als Farbstoffe kamen C.I. Reactive Red 120 und der Farbstoff der Formel A zur Anwendung.

### Herstellung der Farbstofflösung IV

Der 1:2 Metallkomplexfarbstoff C.I. Acid Blue 193 und Ammoniumsulfat wurden in dest. Wasser gelöst und die Lösung mit verdünnter Essigsäure auf einen pH-Wert von 4,5 gestellt. Die Konzentration an C.I. Acid Blue 193 betrug 100 mg/l und die von Ammoniumsulfat 2,5 g/l.

Jeweils vor dem Durchlauf durch die Entfärbesäulen wurde die Farbstofflösung mit verdünnter Schwefelsäure auf einen pH-Wert von 2,5 gestellt.

### Herstellung der Farbstofflösung V

Die Herstellung erfolgte nach der Vorschrift für die Herstellung der Farbstofflösung IV. Als 1:2 Metallkomplexfarbstoff wurde jedoch C.I. Acid Blue 194 verwendet.

### Beispiel 1

### a) Entfärbung

30 g gekörnte Aktivkohle (Korngröße: 0,5 bis 0,85 mm) wurden unter Rühren mit 30 g Diisotridecylamin gleichmäßig vermischt. Anschließend wurden weitere 60 g Aktivkohle untergerührt und das Gemisch in einen 250 ml Tropftrichter gefüllt.

Die Säule wurde mit 100 ml Wasser gespült. Der CSB-Gehalt des Eluates betrug 10 mg/l.

Dann wurden insgesamt 6 l Farbstofflösung I kontinuierlich durch die Säule gegeben und Fraktionen in Form von 250 ml-Portionen gesammelt. Die Kenndaten des entfärbten Abwassers sind in der folgenden Tabelle 1 aufgeführt.

**Tabelle 1**

| Nr. der Fraktion (je 250 ml) | Durchlaufzeit [min] | Extinktion (gemessen bei 510 nm in einer 1-cm-Küvette) | pH-Wert | CSB [mg/l] |
|---|---|---|---|---|
| Ausgangsflotte | | ca. 8,4 | 2,5 | ca. 250 |
| 1 | 60 | 0,012 | 7,0 | 10 |
| 2 | 60 | 0,016 | 6,6 | 5 |
| 3 | 60 | 0,009 | 4,8 | 2 |
| 4 | 60 | 0,006 | 3,2 | 5 |
| 5 | 60 | 0,005 | 3,0 | 2 |
| 6 | 60 | 0,005 | 2,7 | |
| 7 | 60 | 0,004 | 2,6 | |
| 8 | 38 | 0,006 | 2,6 | |
| 9 | 38 | 0,002 | 2,6 | |
| 10 | 38 | 0,002 | 2,6 | |
| 11 | 38 | 0,008 | 2,6 | 6 |
| 12 | 38 | 0,005 | 2,6 | 6 |
| 13 | 38 | 0,003 | 2,8 | 6 |
| 14 | 38 | 0,003 | 2,8 | 6 |
| 15 | 38 | 0,005 | 2,6 | 16 |
| 16 | 38 | 0,007 | 2,6 | 16 |
| 17 | 38 | 0,007 | 2,6 | 16 |
| 18 | 38 | 0,010 | 2,6 | 5 |
| 19 | 38 | 0,015 | 2,6 | 5 |
| 20 | 38 | 0,021 | 2,6 | 5 |
| 21 | 38 | 0,028 | 2,6 | 5 |
| 22 | 38 | 0,028 | 2,6 | 5 |
| 23 | 38 | 0,016 | 2,6 | 5 |
| 24 | 38 | 0,137 | 2,6 | 5 |
| 25 | 38 | 0,828 | 2,6 | 5 |

### b) Regenerierung der Säule

Nachdem die Bindungskapazität für den Farbstoff erschöpft war, wurde die Säule mit 1000 ml Wasser gespült und dann der auf dem Träger befindliche Farbstoff mit 500 ml 10 gew.-%iger Natronlauge quantitativ extrahiert.

Anschließend wurde die Säule mit 1000 ml Wasser und 500 ml verdünnter Schwefelsäure gespült.

### c) Entfärbung von 8,25 l gefärbtem Abwasser mit der unter b) regenerierten Säule

Die Extinktion der entfärbten Abwasserfraktionen lag bei 0,001 bis 0,009 und der CSB-Wert bei 1 bis 3 mg/l. Die ersten beiden Fraktionen besaßen eine Extinktion von 0,243 und 0,031, da der pH-Wert der Säule noch im alkalischen Bereich lag.

### Beispiel 2

Die analog Beispiel 1 präparierte Säule wurde mit 1 gew.-%iger wäßriger Schwefelsäure 24 Stunden hydratisiert. Anschließend wurden 12 l Farbstofflösung I durch die Säule gepumpt, von der 11,5 l vollständig entfärbt wurden. Die TOC-Werte lagen zwischen 1,8 und 4,6 mg/l.

### Beispiel 3

Analog Beispiel 1 wurden mit 30 g Diisotridecylamin und 210 g der in Beispiel 1 beschriebenen Aktivkohle bei einer Durchflußzeit von 500 ml/h 17 l Farbstofflösung I vollständig entfärbt.

Der CSB-Wert der einzelnen Fraktionen lag bei 4 bis 12 mg/l.

### Beispiel 4

Man verfuhr analog Beispiel 1, jedoch wurde die Säule mit 500 ml 1 gew.-%iger wäßriger Schwefelsäure gespült und die Farbstofflösung II durch die Säule gepumpt. Auf diese Weise konnten insgesamt 8,5 l Abwasser entfärbt werden.

**Tabelle 2**

| Volumen [ml] | pH-Wert | Extinktion (gemessen bei 585 nm in einer 1-cm-Küvette) | CSB [mg/l] |
|---|---|---|---|
| 3000 | 2,8 | 0,000 | 6 |
| 3000 | 2,7 | 0,000 | 10 |
| 1000 | 2,7 | 0,000 | 10 |
| 1000 | 2,6 | 0,040 | 7 |
| 500 | 2,6 | 0,056 | 7 |

### Beispiel 5

Analog Beispiel 1 wurden 4 1 Farbstofflösung I mit 90 g reaktivierter Aktivkohle auf Steinkohlebasis (Korngröße: 0,425 bis 2,36 mm), die mit 30 g Diisotrideylamin vermischt war, vollständig entfärbt. Die TOC-Werte lagen bei 2,7 bis 7,8 mg/l.

### Beispiel 6

Es wurde analog Beispiel 1 verfahren, jedoch verwendete man als Träger 60 g gekörnten Braunkohlekoks (Korngröße: 0,8 bis 1,2 mm; Durchflußzeit: 500 ml/h).

**Tabelle 3**

| Nr. der Fraktion (je 500 ml) | Extinktion (gemessen bei 510 nm in einer 1-cm-Küvette) | pH-Wert | CSB [mg/l] |
|---|---|---|---|
| 1 | 0,125 | 10,8 | 38 |
| 2 | 0,036 | 10,0 | 32 |
| 3 | 0,026 | 9,5 | 36 |
| 4 | 0,069 | 3,8 | 36 |
| 5 | 0,052 | 3,7 | 36 |
| 6 | 0,046 | 3,1 | 36 |
| 7 | 0,075 | 2,9 | 36 |
| 8 | 0,033 | 2,9 | 36 |
| 9 | 0,122 | 2,9 | 43 |
| 10 | 0,186 | 2,9 | 43 |
| 11 | 1,616 | 2,7 | 43 |

### Beispiel 7

### a) Entfärbung

90 g gekörnte Aktivkohle (Korngröße: 0,5 bis 1,0 mm) wurden unter Rühren gleichmäßig mit 30 g 1-Amino-3-oleylaminopropan vermischt und die Mischung in einen 250 ml Tropftrichter gefüllt. Anschließend wurden 500 ml 1 gew.-%ige wäßrige Schwefelsäure durch die Säule gegeben, gefolgt von der Farbstofflösung I.

Es konnten 6 1 Farbstofflösung I entfärbt werden. Die TOC-Werte der ersten 2 1 lagen bei 54 und 32 mg/l. Die folgenden 4 1 wiesen TOC-Werte von 0,9 bis 6,4 mg/l auf.

### b) Regenerierung

Die Regenerierung der Kohle/Amin-Mischung erfolgte mit 500 ml 10 gew.-%iger Natronlauge.

### c) Entfärbung

Nach dem Spülen mit 500 ml Wasser wurden wiederum 6 1 Farbstofflösung I entfärbt (TOC: 0,6 bis 6,2 mg/l).

### Beispiel 8

30 g Bis(4-Aminocyclohexyl)methan wurden in 50 ml Aceton gelöst und in 90 g Aktivkohle (Korngröße 0,5 bis 1,0 mm) eingerührt. Nach Verflüchtigung des Acetons (über Nacht) wurde das Kohle-Amin-Gemisch in eine Säule gefüllt und mit 1000 ml 1 gew.-%iger wäßriger Schwefelsäure gespült. Anschließend wurden 7 l Farbstofflösung I durch die Säule geleitet und dabei vollständig entfärbt.

### Beispiel 9

### a) Entfärbung

60 g Sägespäne (mittlere Länge: 2,9 bis 3,4 mm, mittlere Breite: 1 bis 1,2 mm) wurden mit 30 g Diisotridecylamin durch Rühren in einem Becherglas gleichmäßig getränkt und in eine Glassäule (Länge: 35 cm, Durchmesser: 4 cm) auf 30 g unbehandelte Sägespäne gegeben. Anschließend wurde die Farbstofflösung I mit einer Geschwindigkeit von 500 ml/h durch die Säule gepumpt.

Auf diese Weise konnten insgesamt 26 l Farbstofflösung vollständig entfärbt werden. Die Extinktion der einzelnen Fraktionen lag bei 0,000 bis 0,022. Die CSB-Werte der ersten 12,25 l sind in Tabelle 4 angegeben.

**Tabelle 4**

| Volumen [ml] | CSB [mg/l] |
|---|---|
| 250 | 2010 |
| 500 | 935 |
| 1500 | 265 |
| 4000 | 140 |
| 6000 | 55 |

Es ist anzunehmen, daß die hohen CSB-Werte zu Beginn der Elution auf wasserlösliche Begleitstoffe des Holzes zurückzuführen sind. Im weiteren Verlauf (nach 12,25 l) lagen die CSB-Werte zwischen 25 bis 35 mg/l.

### b) Regenerierung

Nach dem Spülen mit 1 l Wasser wurde der auf dem Träger befindliche Farbstoff mittels 1 l 10 gew.-%iger Natronlauge vom Träger größtenteils abgelöst. Anschließend wurde der pH-Wert der Säule mit verdünnter Schwefelsäure auf 2,5 eingestellt.

### c) Entfärbung

Wie unter a) ausgeführt, wurden mit der regenerierten Säule 17 l Abwasser entfärbt (Extinktion: 0,000, CSB-Wert: 7 bis 43 mg/l).

### d) Vergleich

In einem Vergleichsversuch wurden 90 g der unter a) beschriebenen Sägespäne in eine Säule gefüllt, um zu überprüfen, inwieweit Sägespäne (ohne Amin) zur Entfärbung beitragen.

Es konnten nur ca. 500 ml Farbstofflösung I entfärbt werden (CSB: 1645 mg/l).

### Beispiel 10

### a) Entfärbung

30 g Polypropylenflocke wurden mit 30 g Diisotridecylamin verrührt und in eine Glassäule (Länge: 35 cm, Durchmesser: 4 cm) gegeben. Anschließend wurde die Säule mit 500 ml Wasser gespült, dabei wurden ca. 200 ml Wasser vom aktivierten Träger adsorbiert. Anschließend wurden 51 l Farbstofflösung I vollständig entfärbt. Die Extinktion lag bei 0,000 bis 0,017, die CSB-Werte bei 9 bis 25 mg/l.

### b) Regenerierung

Die Regenerierung erfolgte analog Beispiel 9 b) mit 1,5 l 10 gew.-%iger Natronlage.

### c) Entfärbung

Mit der regenerierten Säule wurden 48,5 1 Farbstofflösung I entfärbt. Die Extinktion der einzelnen Fraktionen lag bei 0,000. Bei den letzten 2,5 Litern erhöhen sich die Werte auf 0,012 und 0,050. Die CSB-Werte lagen bei 12 bis 30 mg/l.

### Beispiel 11

30 g haushaltsübliche Watte (Cellulose) wurden in einem Becherglas gleichmäßig mit 30 g Diisotridecylamin getränkt und anschließend gleichmäßig in eine Säule gefüllt (vgl. Bsp. 9). Von 500 ml 1 gew.-%iger wäßriger Schwefelsäure, die zur Einstellung des pH-Wertes in die Säule gegeben wurde, verblieben 400 ml in der Watte/Amin-Füllung. Der Auslauf von 100 ml wies einen TOC-Gehalt von 137 mg/l und einen pH-Wert von 2,5 auf.

Anschließend wurde die Farbstofflösung I (TOC: 53 mg/l, wie in Beispiel 9 beschrieben, mit einer Tropfgeschwindigkeit von 500 ml/h durch die Säule gepumpt. Auf diese Weise wurden 46 Liter vollständig entfärbt. Die TOC-Werte der ersten 4 l lagen bei 13 und 21 mg/l, danach bei 1,9 bis 7 mg/l.

### Beispiel 12

### a) Entfärbung

60 g Wolle wurden in 500 ml einer wäßrigen Lösung, die 2 g/l eines nicht ionischen Netzmittels enthielt, 2 Stunden genetzt und abzentrifugiert. Anschließend wurde die Wolle mit 30 g Diisotridecylamin, gleichmäßig besprüht und in eine Glassäule (Länge 35 cm, Durchmesser 4 cm) gegeben. Die Farbstofflösung I wurde mit einer Geschwindigkeit von 500 ml/h durch die Säule gepumpt. Nach einem Durchlauf von 47 l setzte sich die Säule langsam durch abgelagerten Farbstoff zu, so daß die Tropfgeschwindigkeit allmählich auf 50 ml/h abnahm. Daher wurde der Versuch nach 64 l abgebrochen. Auf diese Weise wurden 64 l Farbstofflösung vollständig entfärbt. Das klare Abwasser wies CSB-Werte von 13 bis 18 mg/l auf.

### b) Rückgewinnung des Amins

Die wäßrige Phase wurde abgelassen und in die Säule, die das Wollmaterial mit Amin und Farbstoff enthielt, 500 ml 10 gew.-%ige Natronlauge gegeben. Nach einem Tag hatte sich die Wolle aufgelöst, und es hatten sich zwei Phasen gebildet. Die obere Phase enthielt 26 ml Diisotridecylamin.

### Beispiel 13

Eine erschöpfte Färbeflotte (Farbstofflösung III mit C.I. Reactive Red 120) wurde durch eine Säule gepumpt, die 90 g Aktivkohle (Korngröße: 0,425 bis 2,36 mm) enthielt. Anschließend passierte das vorgereinigte Abwasser eine zweite Säule, die 90 g Aktivkohle (s.o.) vermischt mit 30 g Diisotridecylamin enthielt. Die Kenndaten des Abwassers vor und nach der Behandlung sind in der folgenden Tabelle 5 aufgeführt.

Auf diese Weise konnten 2 l Färbeflotte fast vollständig entfärbt werden.

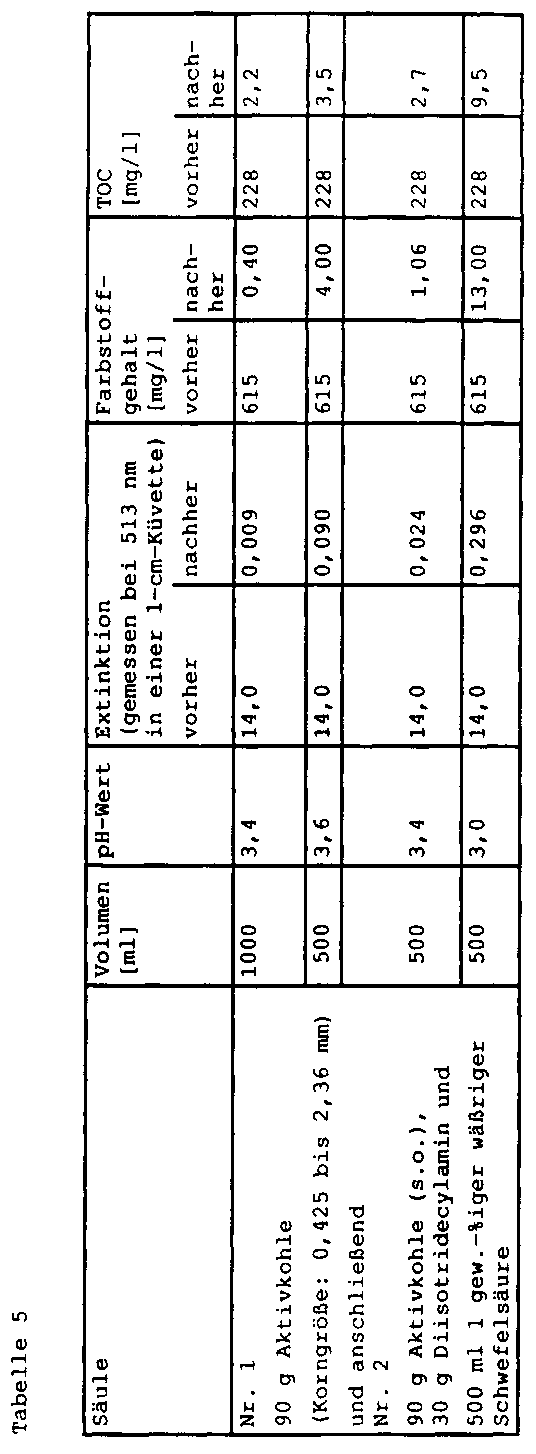

### Beispiel 14

Analog Beispiel 13 wurde die Farbstofflösung III (370 mg/l Farbstoff der Formel A; TOC: 270 mg/l) durch zwei hintereinandergeschaltete Säulen gepumpt.

Die Daten der Säulen und der Abwasserfraktionen vor und nach der Entfärbung sind in der folgenden Tabelle 6 aufgeführt.

Mit Aktivkohle allein wurden nur 1,5 l Färbeflotte entfärbt, mit Aktivkohle und Amin nur 1 l, mit der Doppelsäule dagegen 10,5 l Färbeflotte.

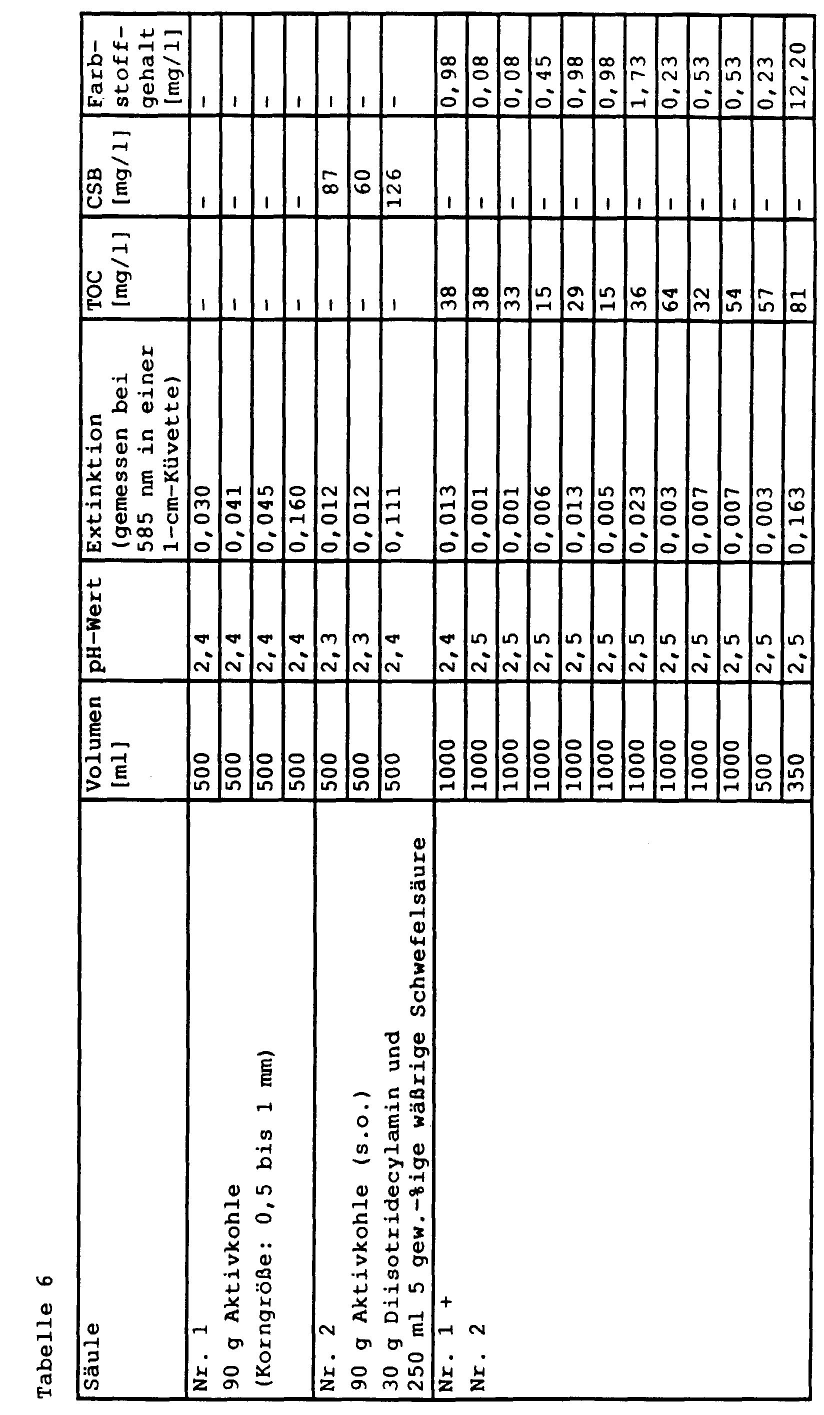

### Beispiel 15

Ein aufgeschäumtes Polykondensat aus Melamin und Formaldehyd mit einer Dichte von ca. 0,011 g/cm³ wurde in unregelmäßige hexaedrische (fast quaderförmige) Flocken mit einer Kantenlänge von ca. 4 bis 8 mm zerschnitten und anschließend in einer Messermühle an der Oberfläche aufgerauht und teilweise weiter zerkleinert. 15 g der so vorbehandelten Schaumflocken wurden mit 30 g Diisotridecylamin getränkt und in eine Glassäule (wie in Beispiel 9 beschrieben) gegeben. Anschließend wurde die Säule mit 650 ml 1 gew.-%iger wäßriger Schwefelsäure gespült. Das Eluat (400 ml) wies einen TOC-Gehalt von 68 mg/l auf.

Dann wurde die Farbstofflösung I von unten nach oben mit einer Durchflußgeschwindigkeit von 1 l/h durch die Säule gepumpt. Auf diese Weise konnten insgesamt 61 l Farbstofflösung vollständig entfärbt werden. Die klaren Eluate wiesen TOC-Werte zwischen 2 und 12 mg/l auf, die pH-Werte lagen jeweils bei ca. 2,5.

Die Extinktion des 62. Liters betrug 0,059.

### Beispiel 16

90 g gekörnte Aktivkohle (Korngröße: 0,5 bis 1,0 mm) wurden unter Rühren gleichmäßig mit 30 g eines sekundären C₁₀/C₁₂-Fettamins vermischt und in eine Glassäule (wie in Beispiel 9 beschrieben) gegeben. Nach dem Spülen mit 1 gew.-%iger wäßriger Schwefelsäure wurden insgesamt 17 l der Farbstofflösung I vollständig entfärbt. Die TOC-Werte lagen zwischen 0,1 und 2,1 mg/l.

### Beispiel 17

Es wurde analog Beispiel 16 verfahren, jedoch wurden anstelle der Aktivkohle 30 g einer Polypropylenflocke als Trägermaterial verwendet. Mit dieser Säule wurden insgesamt 44 l der Farbstofflösung I vollständig entfärbt. Die Extinktion des 45. Liters betrug 0,046, die des 46. Liters 0,110 (gemessen bei 510 nm in einer 1-cm-Küvette). Die TOC-Werte lagen zwischen 0 und 6 mg/l.

### Beispiel 18

Analog Beispiel 13 wurde die Farbstofflösung III durch zwei hintereinandergeschaltete Säulen gepumpt. Die zweite Säule enthielt als aktive Substanz 30 g eines sekundären C₁₀/C₁₂-Fettamins.

Nach einem Durchlauf von insgesamt 8 1 setzte sich die Säule langsam zu, so daß der Versuch aufgrund der geringen Tropfgeschwindigkeit abgebrochen wurde. Das Abwasser war vollständig entfärbt. Die TOC-Werte lagen zwischen 1,6 und 5,6 mg/l.

### Beispiel 19

60 g gekörnte Aktivkohle (Korngröße: 0,5 bis 0,85 mm) wurden unter Rühren mit 30 g Isotridecylamin versetzt und in einen 250 ml Tropftrichter gefüllt. Der aktivierte Träger wurde anschließend mit 500 ml 1 gew.-%iger wäßriger Schwefelsäure gespült. Der TOC-Gehalt des Eluates betrug 44 mg/l.

Dann wurden insgesamt 15 l Farbstofflösung I kontinuierlich durch die Säule gepumpt und vollständig entfärbt. Die TOC-Werte der einzelnen klaren 1 l-Fraktionen lagen zwischen 220 und 240 mg/l.

### Beispiel 20

Analog Beispiel 19 wurden mit 90 g Aktivkohle und 30 g N,N-Dioctyl-N-decylamin 17 l der Farbstofflösung I vollständig entfärbt. Die TOC-Werte lagen zwischen 0 und 4 g/l. Nach 17 l wurde der Versuch abgebrochen, obwohl die Säule noch nicht erschöpft war, da die Durchflußgeschwindigkeit sehr langsam wurde.

### Beispiel 21

Die Farbstofflösung IV wurde durch eine analog Beispiel 15 präparierte Säule von unten nach oben gepumpt (Durchflußgeschwindigkeit 1 l/h).

Die Kenndaten des entfärbten Abwassers sind in der folgenden Tabelle 7 aufgeführt.

**Tabelle 7**

| Nr. der Fraktion je (1000 ml) | Extinktion (gemessen bei 583 nm in einer 1-cm-Küvette) | pH-Wert | TOC [mg/l] |
|---|---|---|---|
| Ausgangsflotte | 1,390 | 2,5 | 61 |
| 1 | 0,00 | 1,4 | 35 |
| 2 | 0,00 | 2,8 | |
| 3 | 0,00 | 2,9 | 41 |
| 4 | 0,00 | 3,0 | |
| 5 | 0,00 | 2,7 | 39 |
| 6 | 0,00 | 2,9 | |
| 7 | 0,00 | 2,9 | |
| 8 | 0,005 | 2,6 | |
| 9 | 0,038 | 2,6 | |
| 10 | 0,039 | 2,6 | 45 |
| 11 | 0,039 | 3,0 | |
| 12 | 0,039 | 2,5 | |
| 13 | 0,047 | 2,5 | |
| 14 | 0,049 | 2,5 | |
| 15 | 0,069 | 2,5 | |

Es konnten insgesamt 14 l Abwasser nahezu vollständig entfärbt werden.

### Beispiel 22

Die Farbstofflösung V wurde auf 70°C erhitzt und durch eine analog Beispiel 15 präparierte Säule von unten nach oben gepumpt (Durchflußgeschwindigkeit 1 l/h). Um Wärmeverluste zu minimieren, wurde die Säule mit wärmedämmendem Material isoliert. Die Temperatur des entfärbten Abwassers lag nach Passieren der Säule bei 40 bis 45°C. Auf diese Weise konnten 122 l Abwasser vollständig entfärbt werden. Die TOC-Werte der einzelnen 1000 ml Fraktionen lagen zwischen 39 und 85 mg/l.

## Patentansprüche

1. Verfahren zur Abtrennung von anionischen organischen Verbindungen aus wäßriger Lösung, wobei man die wäßrige Lösung mit einem oder mehreren primären, sekundären oder tertiären Monoaminen, Diaminen oder Triaminen, die sich auf einem Träger befinden, behandelt.

2. Verfahren nach Anspruch 1, dadurch gekennzeichnet, daß man organische Verbindungen abtrennt, die eine Sulfonat-, Sulfato-, Carboxylat- oder Phosphonatgruppe als anionischen Rest aufweisen.

3. Verfahren nach Anspruch 1, dadurch gekennzeichnet, daß man als organische Verbindungen Farbstoffe abtrennt.

4. Verfahren nach Anspruch 1, dadurch gekennzeichnet, daß man als wäßrige Lösung Farbstoffe enthaltendes Abwasser verwendet.

5. Verfahren nach Anspruch 1, dadurch gekennzeichnet, daß man primäre, sekundäre oder tertiäre Amine verwendet, die 6 bis 30 Kohlenstoffatome aufweisen.

6. Verfahren nach Anspruch 1, dadurch gekennzeichnet, daß man als Träger anorganische oder organische Materialien verwendet, die eine spezifische Oberfläche von mindestens 10 m²/g aufweisen.

## Claims

1. A process for removing anionic organic compounds from aqueous solution, which comprises treating the aqueous solution with one or more primary, secondary or tertiary monoamines, diamines, or triamines present on a carrier.

2. A process as claimed in claim 1, wherein the organic compounds removed have a sulfonate, sulfato, carboxylate or phosphonate group as anionic radical.

3. A process as claimed in claim 1, wherein the organic compounds removed are dyes.

4. A process as claimed in claim 1, wherein the aqueous solution used is wastewater that contains dyes.

5. A process as claimed in claim 1, wherein the primary, secondary or tertiary amines used have from 6 to 30 carbon atoms.

6. A process as claimed in claim 1, wherein the carriers used are inorganic or organic materials having a specific surface area of at least 10 m²/g.

## Revendications

1. Procédé de séparation de composés organiques anioniques d'avec une solution aqueuse, conformément auquel on traite la solution aqueuse par des triamines, des diamines, ou des monoamines, primaires, secondaires ou tertiaires, qui se trouvent sur un support.

2. Procédé suivant la revendication 1, caractérisé en ce que l'on sépare des composés organiques qui présentent, à titre de reste anionique, un groupe sulfonate, sulfato, carboxylate, ou phosphonate.

3. Procédé suivant la revendication 1, caractérisé en ce que l'on sépare des colorants à titre de composés organiques.

4. Procédé suivant la revendication 1, caractérisé en ce que l'on utilise, à titre de solution aqueuse, une eau résiduaire contenant des colorants.

5. Procédé suivant la revendication 1, caractérisé en ce que l'on utilise des amines primaires, secondaires ou tertiaires, qui comportent de 6 à 30 atomes de carbone.

6. Procédé suivant la revendication 1, caractérisé en ce que l'on utilise, à titre de support, des matériaux inorganiques ou organiques qui possèdent une surface spécifique d'au moins 10 m²/g.
